# EUROPÄISCHE PATENTSCHRIFT

(11) **EP 2 505 876 B1**
(45) Veröffentlichungstag und Bekanntmachung des Hinweises auf die Patenterteilung: **29.07.2015**
(21) Anmeldenummer: 12155330.9
(22) Anmeldetag: 14.02.2012
(51) Int. Cl.: F16H 7/08, F16H 7/18

(54) **Führungsbauteil aus Kunststoff zum Führen einer Endloskette eines Kettentriebs**
Plastic guide component for guiding an endless chain of a chain drive
Composant de guidage en matière synthétique pour le guidage d'une chaîne sans fin d'un entraînement de chaîne

(30) Priorität: 29.03.2011 DE 102011006306
(43) Veröffentlichungstag der Anmeldung: 03.10.2012
(73) Patentinhaber: Bayerische Motoren Werke Aktiengesellschaft, 80809 München (DE)
(72) Erfinder: Reisinger, Walter, 4311 Schwertberg (AT); Holzer, Stefan, 3352 St. Peter/Au (AT)

(56) Entgegenhaltungen:
- DE-A1- 10 344 013
- DE-A1- 19 709 476
- DE-A1-102005 018 901
- DE-A1-102007 015 677
- JP-A- 2008 291 888

## Beschreibung

Die Erfindung betrifft ein Führungsbauteil aus Kunststoff zum Führen einer Endloskette eines Kettentriebs.

Nockenwellen oder Einspritzpumpen von Brennkraftmaschinen werden häufig von einem beispielsweise mit einer Kurbelwelle der Brennkraftmaschine drehfest verbundenen Antriebsrad mittels eines Umschlingungsmittels, beispielsweise einer Endloskette, angetrieben, die in Eingriff mit dem Abtriebsrad und einem angetriebenen Rad ist, das mit einer Nockenwelle bzw. einer Welle einer Einspritzpumpe drehfest verbunden ist. Zur Führung und Spannung des Umschlingungsmittels, insbesondere einer Endloskette, läuft dieses über wenigstens ein Führungsbauteil, das das Umschlingungsmittel auf Spannung hält und etwaige im Umschlingunsmittel auftretende Schwingungen unterdrückt.

Bekannt sind mehrteilig aufgebaute Führungsbauteile mit einem Trägerteil aus Glasfaser verstärktem Kunststoff, das eine Führungsschiene zur Anlage des Umschlingungsmittels bildet, die mit einem Gleitbelag versehen ist, der beispielsweise aus Polyamid besteht.

Aus der DE 19721199 C1 ist ein Führungsbauteil aus Kunststoff bekannt, das einen langgestreckten Trägerteil und eine sich längs des Trägerteils erstreckende Führungsschiene aufweist. Die Führungsschiene hat einen etwa U-förmigen Querschnitt und besteht aus einem Kunststoff mit guten Gleiteigenschaften. Trägerteil und Gleitteil sind als einteiliges Bauteil ausgebildet, wobei der Trägerteil zusammen mit der Führungsschiene im Querschnitt ein Hohlkastenprofil bildet, dessen eine Längswand den Boden des Gleitteils bildet und dessen zwei über das Kastenprofil frei hinausragende Seitenwände Führungswände des Gleitteils bilden.

Aus der DE 60219563 T2 ist ein Führungsbauteil aus Kunststoff zum Führen einer Endloskette eines Kettenantriebs bekannt, das eine Führungsschiene und ein Schienenträgerelement aufweist, das als eine Einheit mit der Schiene gegossen ist. Das Trägerelement enthält einen Unterzug, der die beiden voneinander abgewandten Enden der Führungsschiene verbindet und eine zwischen dem Unterzug und der Führungsschiene meanderförmig verlaufende Verstärkungsrippe, kungsrippe, die jeweils in Längsrichtung beabstandet den Unterzug und die Rückseite der Führungsschiene berührt.

Aus der DE 10 2005 018 901 A1, von der im Oberbegriff des Anspruchs 1 ausgegangen wird, ist ein Führungsbauteil mit einer Führungsschiene mit Doppel-T-förmigem Querschnitt bekannt, wobei ein eine Gleitfläche für eine Endloskette bildender Oberzug über einen verrippten Steg mit einem Unterzug verbunden ist. In Vertiefungen der Stegrippen sind Seitenplatten spielfrei eingelassen, die die Steifigkeit der Führungsschiene erhöhen. Die Seitenwände sind mit von der Gleitfläche beabstandeten Ausnehmungen ausgebildet, wodurch die Fläche der Seitenwände, die bei seitlichem Führungsbedarf einer Endloskette mit dieser in Berührung gelangen, vermindert ist.

In der DE 103 44 013 A1 ist eine Führungsschiene mit Doppel-T-förmigem Querschnitt beschrieben, deren Oberseite eine konvexe Gleitfläche für eine Endloskette bildet. Jede Längsseite der Gleitfläche wird von einer Seitenwand begrenzt, die etwa parallel zum Steg des Doppel-T's vorsteht.

Die DE 10 2007 015 677 A1 offenbart eine Führungsschiene mit Doppel-T-förmigem Querschnitt. Zur Verstärkung der Führungsschiene sind metallische Verstärkungen in den die Gleitfläche bildenden Oberzug und den Unterzug oder eine dem Unterzug zugewandte Fläche des Oberzugs und eine vom Oberzug abgewandte Fläche des Unterzugs eingebracht und mit dem Grundmaterial fest verbunden. Die Innenseiten von an den Längsrändern der Gleitflächen ausgebildeten kurzen Seitenwänden gehen unmittelbar in die Gleitflächen über.

Die DE 197 09 476 A1 beschreibt eine Führungsschiene mit Doppel-T-förmigem Querschnitt, wobei der Steg des Doppel-T's einen mit einer Gleitfläche ausgebildeten Oberzug mit einem Unterzug verbindet. Die einstückige Führungsschiene besteht aus einer Polymermasse mit Graphit oder Aramidfasern zur Erhöhung der Festigkeit.

In der JP 2008 291 888 A ist ein Führungsbauteil mit insgesamt U-förmigem Querschnitt beschrieben, wobei die Innenseiten der die Schenkel des U bildenden Seitenwänden unterschiedlich konfiguriert sind. Bei der Ausführungsform gemäß Figur 9 weisen die Innenseiten der Seitenwände eine in geringem Abstand von der Gleitfläche ausgebildete Lippe auf, die über eine etwa halbkreisförmige Auskehlung in eine am oberen Ende der Seitenwand ausgebildete weitere Lippe übergeht. Die Scheitelpunkte der Lippen liegen etwa senkrecht übereinander, sodass eine Endloskette bei seitlicher Führung beide Lippen berührt. Bei der Ausführungsform gemäß Figur 7 ist die nahe der Gleitfläche ausgebildete Lippe durch eine rechtwinklige Stufe ersetzt, wobei die Innenseite der Stufe senkrecht unter dem Scheitel der weiteren Lippe liegt. Bei der Ausführungsform gemäß Figur 8 geht die Gleitfläche über einen konkaven Übergangsbereich in die Auskehlung über, wobei der Fußpunkt des Übergangsbereiches wiederum senkrecht unter dem Scheitel der weiteren Lippe liegt.

Der Erfindung liegt die Aufgabe zugrunde, ein einfach herstellbares Führungsbauteil aus Kunststoff zum Führen einer Endloskette eines Kettentriebs zu schaffen, das über lange Betriebszeiten eine einwandfreie Führung der Endloskette gewährleistet.

Diese Aufgabe wird mit einem Führungsbauteil gemäß dem Anspruch 1 gelöst.

Die Unteransprüche sind auf vorteilhafte Ausführungsformen und Weiterbildungen des erfindungsgemäßen Führungsbauteils gerichtet.

Die Erfindung wird im Folgenden anhand schematischer Zeichnungen beispielsweise und mit weiteren Einzelheiten erläutert.

In den Figuren stellen dar:
Fig. 1 eine Seitenansicht eines Führungsbauteils,
Fig. 2 eine Querschnittsansicht des Führungsbauteils der Fig. 1, geschnitten in der Ebene II-II,
Fig. 3 eine Querschnittsansicht des Führungsbauteils der Fig. 1, geschnitten in der Ebene III-III,
Fig. 4 eine perspektivische Aufsicht auf das Führungsbauteil schräg von hinten gemäß Fig. 1,
Fig. 5 eine Aufsicht auf das Führungsbauteil gemäß Fig. 4 und
Fig. 6 eine perspektivische Ansicht schräg von vorne und unten des Führungsbauteils gemäß Fig. 1.

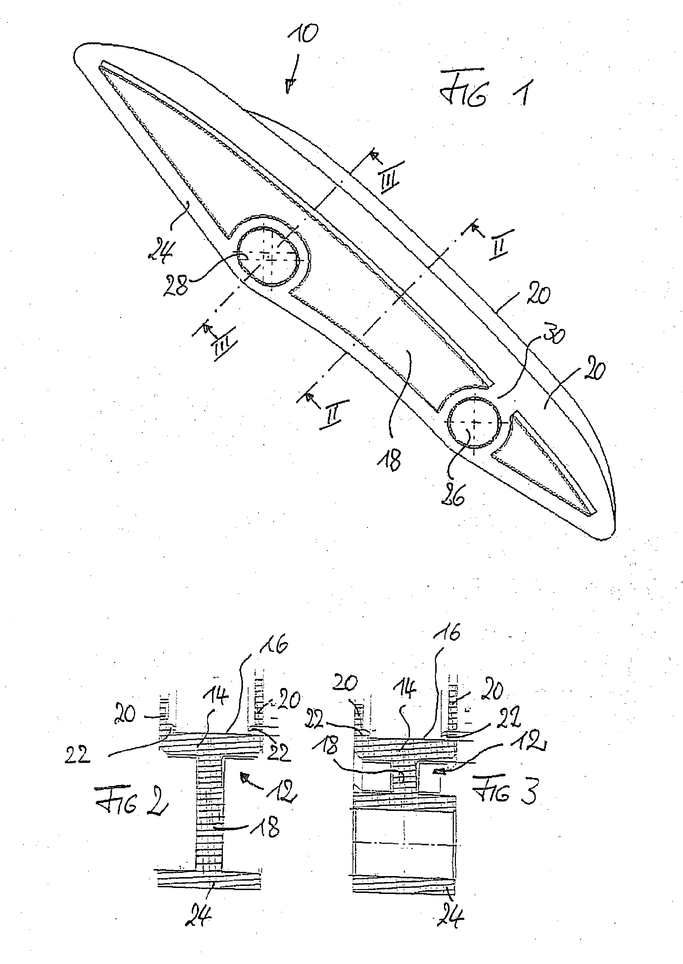

Nachfolgend wird als Längsrichtung des Führungsbauteils die Richtung zwischen seinen beiden Enden gemäß Fig. 1 bezeichnet. Die Querrichtung ist die Richtung quer zur Längsrichtung.

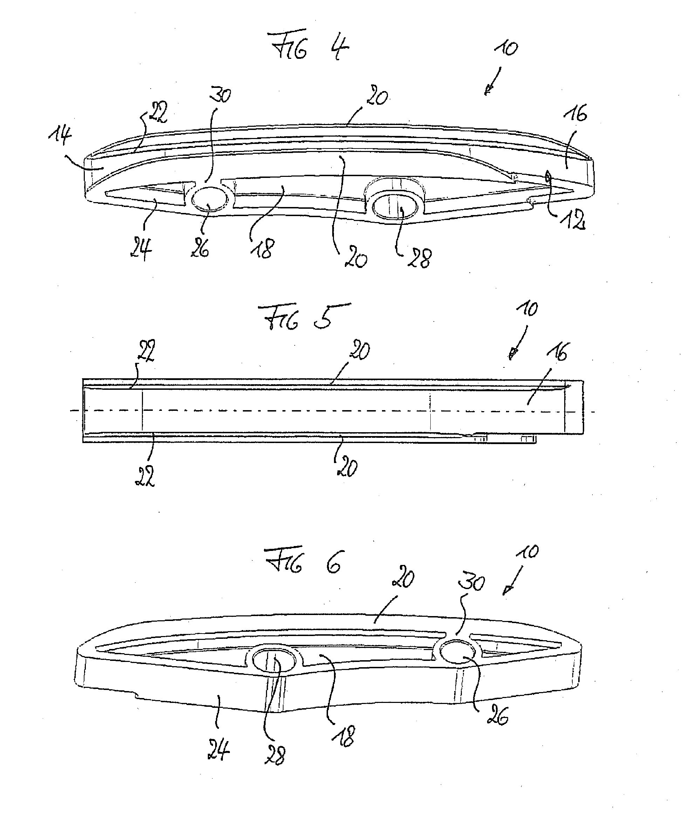

Wie insbesondere aus den Fig. 1 bis 4 ersichtlich bildet das Führungsbauteil 10 eine Führungsschiene 12 mit insgesamt T-förmigem Querschnitt. Das Dach 14 des T hat eine Oberseite, die eine in Querrichtung des Führungsbauteils 10 ebene Gleitfläche 16 bildet. Der Steg 18 des T bildet eine in Längsrichtung der Führungsschiene 14 verlaufende Versteifungsrippe, die die Biegesteifigkeit um eine Querachse vergrößert. Die gesamte Führungsschiene 12 ist derart gebogen, dass die Gleitfläche 16 in Längsrichtung konvex ist.

Die Gleitfläche 16 ist seitlich von längs des Führungsbauteils verlaufenden Seitenwänden 20 begrenzt, die etwa parallel zum Steg 18 nach oben vorstehen. Die Höhe der Seitenwände kann unterschiedlich sein. Auch die Längserstreckung beider Seitenwände 20 längs des Führungsbauteils 10 kann unterschiedlich sein.

Im Übergangsbereich zwischen der Gleitfläche 16 und den Seitenwänden 20 sind Wulste 22 ausgebildet, deren Oberfläche vorteilhaft im Querschnitt etwa einen Viertelkreis mit kleinem Radius bildet.

Der Steg 18 endet an seinem vom Dach 14 abgewandten Ende in einem Unterzug 24, der am vorderen und hinteren Ende des Führungsbauteils 10 unmittelbar mit dem Dach 14 verbunden ist. Wie ersichtlich, nimmt die Höhe des Stegs 18 zu den Enden des Führungsbauteils 10 hin entsprechend ab. Der Unterzug 24 ist vorzugsweise etwa so breit wie das Dach 14 und parallel zum Dach 14 gerichtet. Auf diese Weise entsteht, wie insbesondere aus Fig. 2 ersichtlich, aus dem Dach 14, dem Steg 18 und dem Unterzug 24 im Querschnitt eine Doppel-T-Struktur.

Das Führungsbauteil 10 ist mit zwei Queröffnungen 26 und 28 ausgebildet, wobei die Queröffnung 26 beispielsweise der Lagerung des Führungsbauteils 10 um eine mit der Queröffnung 26 koaxiale Achse dient und die Queröffnung 28 zur Aufnahme eines Zapfens dient, der zum Verschwenken des Führungsbauteils 10 um die Achse der Queröffnung 26 mittels einer Spanneinrichtung (nicht dargestellt) beweglich ist.

Im Bereich der durch den Steg 18 hindurchführenden Queröffnungen 26 und 26 läuft der Unterzug 24 um die gesamte jeweilige Queröffnung um, so dass die axiale Länge der Queröffnungen der Breite des Unterzugs 24 entspricht. Der um die Queröffnung 26 umlaufende Unterzug 24 ist mit dem Dach 14 an jeder Seite des Führungsbauteils 10 zusätzliche über eine Rippe 30 verbunden.

Die Funktion des Führungsbauteils 10 zur Führung einer umlaufenden Endloskette (nicht dargestellt) ist an sich bekannt. Die Gleitfläche 16 des Führungsbauteils 10 liegt von innen her an der umlaufenden Endloskette an und wird durch Verschwenken in Richtung einer höheren Spannung der Endloskette gegen diese verschwenkt. Das Führungsbauteil 10 ist derart angeordnet, dass sich die Innenseite der Kette möglichst längs der gesamten Gleitfläche 16 bewegt. Dadurch, dass die Gleitfläche 16 bzw. das Dach 14 mit dem Steg 18 ausgebildet ist, ist die Gleitfläche sehr stabil. Wegen der homogenen Gestalt des Daches 14 mit dem einteilig damit ausgebildeten Steg 18 bleibt die Gleitfläche auch bei hoher Belastung und großen Temperaturänderungen in Längsrichtung homogen, ohne dass sich irgendwelche Verwerfungen bilden, die zu ungleichmäßiger Auflage bzw. Kontaktkraft (Reibung) bis hin zu lokalem Kontaktverlust und dadurch zu Schwingungen und Stoßanregung führen können. Die Wulste 22 sorgen für eine sichere Führung der Kette längs der Gleitfläche 16, ohne dass die gesamte Seitenfläche der Kette in Berührung mit den Seitenwänden 20 gelangt. Das Führungsbauteil gewährleistet über lange Betriebszeiten und einen großen Temperaturbereich von unter -30°C bis über +150°C eine einwandfreie Führung einer Endloskette. Zusätzlich ist die Führung der Kette geräuscharm.

Das beispielhaft beschriebene Führungsbauteil kann vielfältig abgeändert werden, ohne dass die in den beigefügten Ansprüchen gegebene Lehre verlassen wird. Beispielsweise kann der Steg 18 zur Gewichtseinsparung mit Aussparungen versehen sein. Die Rippe 30 kann fehlen. Sie kann auch durch mehrere Rippen ersetzt sein und zusätzlich am Umfang der Queröffnung 28 ausgebildet sein. Es können mehrere Queröffnungen vorgesehen sein, die beispielsweise einen Einsatz des Führungsbauteils für unterschiedliche Motortypen ermöglichen.

Das Führungsbauteil 10 ist vorteilhafter Weise einteilig im Spritzgussverfahren, beispielsweise aus Polyamid PA 6.6 oder bei sehr hoher erforderlicher Festigkeit Polyamid PA 4.6, hergestellt. Die Gleitfläche 16 kann zusätzlich mit einem reibungsmindernden Material beschichtet sein.

### Bezugszeichenliste:

- 10: Führungsbauteil
- 12: Führungsschiene
- 14: Dach
- 16: Gleitfläche
- 18: Steg
- 20: Seitenwand
- 22: Wulst
- 24: Unterzug
- 26: Queröffnung
- 28: Queröffnung
- 30: Rippe

## Patentansprüche

1. Führungsbauteil aus Kunststoff zum Führen einer Endloskette eines Kettentriebs, enthaltend
eine Führungsschiene (12) mit T-förmigem Querschnitt, wobei die Oberseite des Daches (14) des T eine konvexe Gleitfläche (16) für die Endloskette bildet, der Steg (18) des T eine in Längsrichtung der Führungsschiene verlaufende Versteifungsrippe bildet und jede Längsseite der Gleitfläche (16) durch eine Seitenwand (20) begrenzt ist, die von der vom Steg (18) abgewandten Seite des Daches (14) etwa parallel zum Steg vorsteht,
**dadurch gekennzeichnet, dass**
die gesamten Übergangsbereiche zwischen dem Dach (14) und den Seitenwänden (20) mit sich längs der Seitenränder der Gleitfläche (16) erstreckenden Wulsten (22) ausgebildet sind, und dass die Oberfläche jedes Wulstes (22) im Querschnitt etwa einen Viertelkreis mit kleinem Radius bildet.

2. Führungsbauteil nach Anspruch 1, wobei die voneinander abgewandten Enden des Daches (14) über einen Unterzug (24) miteinander verbunden sind.

3. Führungsbauteil nach Anspruch 2, wobei der Steg (18) das Dach (14) mit dem Unterzug (24) verbindet.

4. Führungsbauteil nach einem der Ansprüche 1 bis 3, wobei durch den Steg (18) wenigstens eine Queröffnung (26, 28) hindurchführt.

5. Führungsbauteil nach Anspruch 4, wenn abhängig von einem der Ansprüche 2 oder 3, wobei sich der Unterzug (24) um die wenigstens eine Queröffnung (26, 28) herum erstreckt.

6. Führungsbauteil nach einem der Ansprüche 1 bis 5, wobei das Führungsbauteil (10) ein Spritzgussbauteil aus einheitlichem Kunststoff ist.

## Claims

1. A guide component made of plastics material for guiding an endless chain of a chain drive, containing
a guide rail (12) with a T-shaped cross section, wherein the upper side of the roof (14) of the T forms a convex sliding face (16) for the endless chain, the web (18) of the T forms a reinforcement rib running in the longitudinal direction of the guide rail and each longitudinal side of the sliding face (16) is limited by a side wall (20), which projects from the side of the roof (14) remote from the web (18) approximately parallel to the web,
**characterised in that**
the entire transition regions between the roof (14) and the side walls (20), are configured with beads (22) extending along the side edges of the sliding face (16), and
**in that** the surface of each bead (22) cross sectionally forms approximately a quarter circle with a small radius.

2. A guide component according to claim 1, wherein the ends of the roof (14) that are remote from one another are connected to one another by a beam (24).

3. A guide component according to claim 2, wherein the web (18) connects the roof (14) to the beam (24).

4. A guide component according to any one of claims 1 to 3, wherein at least one transverse opening (26, 28) passes through the web (18).

5. A guide component according to claim 4, when depending on either of claims 2 or claim 3, wherein the beam (24) extends around.the at least one transverse opening (26, 28).

6. A guide component according to any one of claims 1 to 5, wherein the guide component (10) is an injection-moulded component made of uniform plastics material.

## Revendications

1. Elément de guidage en matériau synthétique pour permettre de guider une chaîne sans fin d'un entraînement par chaîne comprenant :
un rail de guidage (12) ayant une section en forme de T, la face supérieure de la branche supérieure (14) du T formant une surface de glissement convexe (16) pour la chaîne sans fin, la branche centrale (18) du T formant une nervure de rigidification s'étendant dans la direction longitudinale du rail de guidage et chacune des faces longitudinales de la surface de glissement (16) étant limitée par une paroi latérale (20) qui fait saillie essentiellement parallèlement à la branche centrale sur la face de la branche supérieure (14) située à l'opposé de cette branche centrale (18),
**caractérisée en ce que**
les zones de transition entre la branche supérieure (14) et les parois latérales (20) sont formées dans leur totalité avec des bourrelets (22) s'étendant le long des bords latéraux de la surface de glissement (16), et sur la face de chaque bourrelet (22) a une section essentiellement en forme de quart de cercle avec un petit rayon.

2. Elément de guidage conforme à la revendication 1,
dans lequel les extrémités situées à l'opposé l'une de l'autre de la branche supérieure (14) sont reliées entre elles par un renfort (24).

3. Elément de guidage conforme à la revendication 2, dans lequel la branche centrale (18) relie la branche supérieure (14) et le renfort (24).

4. Elément de guidage conforme à l'une des revendications 1 à 3, dans lequel au moins une ouverture transversale (26, 28) s'étend au travers de la branche centrale (18).

5. Elément de guidage conforme à la revendication 4, lorsqu'elle dépend de l'une des revendications 2 et 3 dans lequel le renfort (24) s'étend autour de l'ouverture transversale (26, 28).

6. Elément de guidage conforme à l'une des revendications 1 à 5, constitué par un élément moulé par injection (10) en un matériau synthétique homogène.
